# EUROPÄISCHE PATENTSCHRIFT

(11) **EP 2 607 721 B1**
(45) Veröffentlichungstag und Bekanntmachung des Hinweises auf die Patenterteilung: **18.05.2016**
(21) Anmeldenummer: 12194210.6
(22) Anmeldetag: 26.11.2012
(51) Int. Cl.: F16B 7/04, F16B 19/00, F16B 5/00, B61D 17/04, B61D 17/10

(54) **Verbindung von mindestens zwei Bauteilen mit einem stiftförmigen Verbindungsmittel**
Connection of at least two components with a pin-shaped connection
Liaison d'au moins deux composants avec un moyen d'attache en forme de broche

(30) Priorität: 23.12.2011 DE 102011089807; 09.01.2012 DE 102012200208
(43) Veröffentlichungstag der Anmeldung: 26.06.2013
(73) Patentinhaber: Siemens Aktiengesellschaft, 80333 München (DE)
(72) Erfinder: Schmidt, Gerhard, 45127 Essen (DE)

(56) Entgegenhaltungen:
- EP-A1- 0 468 166
- EP-A2- 1 607 638
- EP-A2- 2 141 365
- DE-A1-102007 036 670
- DE-U1- 9 216 955
- FR-A1- 2 900 219
- US-A- 3 998 022

## Beschreibung

Die Erfindung betrifft eine Verbindung von Bauteilen mit fluchtenden Rechteck-Löchern nach dem Oberbegriff von Anspruch 1.

Eine solche Verbindung ist beispielsweise aus der DE 92 16 955 U1, aber auch aus der FR 2 900 219 A1 und der EP 0 468 166 A1 bekannt. In diesen sämtlichen Fällen sind stiftförmige Verbindungsmittel vorgesehen, welche zum Verbinden von Bauteilen in fluchtende Rechteck-Löcher eingreifen, wobei jedoch jeweils eine unmittelbare Anlage der stiftförmigen Verbindungsmittel an Innenseiten der Rechteck-Löcher gegeben ist.

Ein weiteres bekanntes Verbindungsmittel dieser Art ist als sogenannter Spannstift beispielsweise aus dem Buch von O. Richter und R. v. Voss "BAUELEMENTE DER FEINMECHANIK", 1959, Seiten 126 und 127 bekannt. Das bekannte Verbindungsmittel stellt einen durchgehend geschlitzten Rohrzylinder aus Federstahl dar, der in fluchtende, runde Löcher von miteinander zu verbindenden Bauteilen eingreift. Der bekannte Spannstift ist so ausgebildet, dass auch nach seinem Einbringen in die fluchtenden Löcher der zu verbindenden Bauteile sein C-förmiger Querschnitt nicht geschlossen ist, sondern ein Schlitz offen bleibt. Dadurch ist eine Federung seines Rohrmaterials ermöglicht.

Der Erfindung liegt die Aufgabe zugrunde, eine Verbindung von Bauteilen mit fluchtenden Rechteck-Löchern zu schaffen, bei der auch hohe mechanische Belastungen nicht zu Beschädigungen an den beiden Bauteilen führen.

Zur Lösung dieser Aufgabe ist bei der Verbindung erfindungsgemäß vorgesehen, dass zwischen den Bereichen der Endabschnitte (5a,5b;5a,6b) des Verbindungsmittels (5;6) und den einander gegenüber liegenden Wänden (14,15) der Rechteck-Löcher (4,4) äußere Positionier-Formstücke (16,17) mit Ausnehmungen liegen, deren Ausgestaltung der des C-förmigen Verbindungsmittels im Bereich der Auflager (5c,5d;6c,6d) entspricht und in die das Verbindungsmittel (5;6) jeweils mit seinem Auflager (5c,5d;6c,6d) eingreift, wobei die Lage der Ausnehmungen so gewählt ist, dass das Verbindungsmittel (5;6) bis auf seine Auflager (5c,5d;6c,6d) frei in den Rechteck-Löchern (3,4) liegt.

Vorteilhaft an der erfindungsgemäßen Verbindung ist, dass sie starke mechanische Querbelastungen am Ort der Verbindungsstelle zwischen den Bauteilen mittels des Verbindungsmittels zuverlässig aufnehmen kann, weil das Verbindungsmittel im Zusammenspiel von anliegenden Positionier-Formstücken mit dem Verbindungsmittel zugewandten Ausnehmungen und Eingreifen der Auflager des Verbindungsmittels in die Ausnehmungen mit einem Krümmungsradius, der kleiner oder größer als der halbe Abstand der Auflager voneinander ist, definiert in den Rechteck-Löchern gehalten ist. Dadurch kann die Verbindungsstelle zwischen den beiden Bauteilen in einer Vorzugsrichtung quer zum C-förmigen Querschnitt des Verbindungsmittels querbelastet werden; Beschädigungen an den Bauteilen werden verhindert.

Vorteilhaft ist diese erfindungsgemäße Verbindung unter anderem insofern, als bei ihr das Verbindungsmittel allein durch seine Formgebung in einer definierten Lage in den fluchtenden Rechteck-Löchern gehalten wird und damit eine bevorzugte Querbelastungsrichtung vorgegeben wird; an der Trennstelle der beiden Bauteile lassen sich dann Beschädigungen an den Bauteilen bei Querbelastung verhindern.

Bei der erfindungsgemäßen Verbindung können Bauteile unterschiedlicher Art verwendet werden; vorteilhaft erscheint es, wenn die Bauteile Profilteile mit jeweils mindestens einem Längskanal sind und die Längskanäle die fluchtenden Rechteck-Löcher bilden. Dabei können die Längskanäle im Querschnitt rechteckförmig oder quadratisch ausgebildet sein.

Ferner ermöglicht die erfindungsgemäße Verbindung in vorteilhafterweise die Verwendung von Bauteilen aus Aluminium, und zwar auch dann, wenn das Verbindungsmittel vorteilhafterweise aus Federstahl besteht. Federstahl ist zwar relativ hart im Vergleich beispielsweise zu Aluminium, jedoch ist durch die erfindungsgemäße Formgebung des C-förmigen Querschnitts des Verbindungsmittels die Eigenschaft erzielt, dass das Verbindungsmittel sehr gut federelastisch ist und daher ohne Beschädigung von Aluminium-Bauteilen die Belastung an der Verbindung aufnimmt.

Die erfindungsgemäße Verbindung kann in unterschiedlicher Weise eingesetzt werden. Ein besonders vorteilhafter Einsatzfall ist gegeben, wenn die Blechprofile als Fußboden-Sitzschienen für ein Schienenfahrzeug oder einen Autobus ausgebildet sind.

Zur weiteren Erläuterung der Erfindung ist in
- Figur 1: eine perspektivische Darstellung eines Ausführungsbeispiels der erfindungsgemäßen Verbindung, in
- Figur 2: ein Schnitt durch dasselbe Ausführungsbeispiel und in
- Figur 3: ein Schnitt durch ein weiteres Beispiel einer nicht erfindungsgemäßen Verbindung dargestellt.

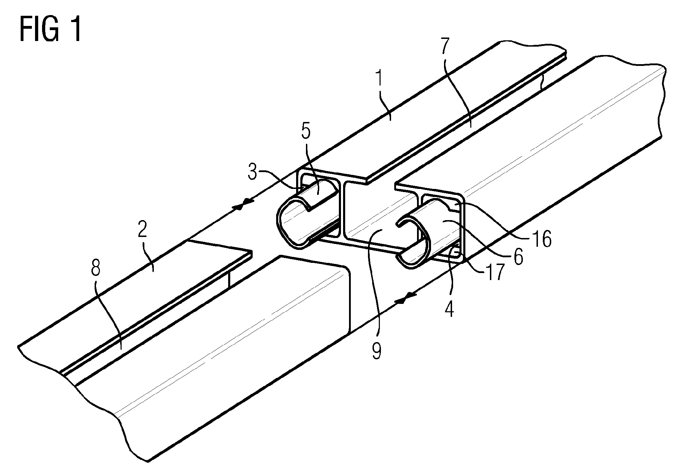

Wie die Figur 1 zeigt, besteht die dargestellte Verbindung aus einem Profil 1 und einem weiteren Profil 2, die jeweils so ausgebildet sind, dass sie Längskanäle 3 und 4 mit rechteckförmigem Querschnitt aufweisen. In die Längskanäle 3 und 4 des Profilteils 1 ist jeweils ein Verbindungselement 5 und 6 so eingebracht, dass es zum Teil aus dem jeweiligen Längskanal 3 bzw. 4 hervorsteht. Die Verbindungsmittel 5 und 6 sind beispielweise etwa zur Hälfte in das Profilteil 1 eingebracht. Nach dem Zusammenfügen der Profilteile 1 und 2 befinden sich die Verbindungsmittel 5 und 6 in den Längskanälen 3 und 4 der beiden Profilteile 1 und 2; die beiden Profilteile 1 und 2 liegen dann stirnseitig dicht aneinander.

Wie die Figur 1 ferner erkennen lässt, sind die Profilteile 1 und 2 mit jeweils einem Schlitz 7 und 8 versehen, die sich nach unten hin zu einem Aufnahmekanal 9 öffnen, wodurch die Möglichkeit geschaffen ist, beispielsweise Sitze eines Schienenfahrzeuges mit einem entsprechenden Befestigungsprofil einzuschieben und zu halten.

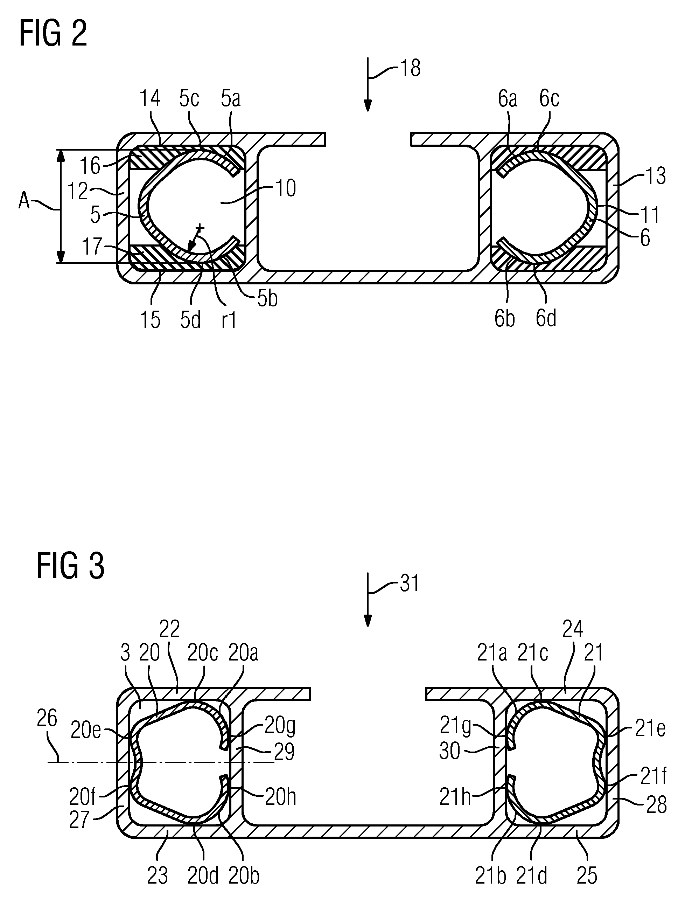

In der Figur 2 ist im Detail zu erkennen, dass die Verbindungsmittel 5 und 6 mit C-förmigem Querschnitt in ihren Endabschnitten 5a und 5b bzw. 6a und 6b außen einander gegenüberliegend jeweils ein Auflager 5c und 5d bzw. 6c und 6d bilden. Im Bereich dieser Auflager hat das Verbindungsmittel einen Krümmungsradius rl, der ungleich dem halben Abstand A zwischen den Auflagern ist, also größer oder kleiner als der halbe Abstand A - hier kleiner - ist. Ferner geht aus der Figur 2 deutlich hervor, dass ein mittlerer Bereich 11 der Verbindungsmittel 5 und 6 mit Abstand zu Seitenwänden 12 und 13 der Längskanäle 3 und 4 liegt.

Ferner ist der Figur 2 zu entnehmen, dass zwischen jedem Endabschnitt 5a bzw. 5b sowie 6a bzw. 6b bzw. den Auflagern 5c und 5d bzw. 6c und 6d und der Innenwand 14 bzw. 15 der Längskanäle 3 und 4 Positionier-Formstücke 16 und 17 liegen, die entsprechend der Außenkontur der Auflager 5c bzw. 5d sowie 6c bzw. 6d der Verbindungsmittel 5 und 6 ausgebildet sind. Dadurch ist einerseits eine sichere Positionierung der Verbindungsmittel 5 und 6 innerhalb der hier quadratischen Längskanäle 3 und 4 der Profilteile 1 und 2 und andererseits eine leichte Verformung der Verbindungsmittel 5 und 6 bei Belastung in Richtung des Pfeils 18 ermöglicht. Dabei verhindern die gewählten Krümmungsradien im Bereich der Auflager eine Drehung des Verbindungsmittels 5 bzw. 6 um den Mittelpunkt der einander gegenüberliegenden Auflager.

Auf diese Weise ist ein Verbindungsmittel 5 bzw. 6 mit hoher Elastizität in Richtung des Pfeils 18 geschaffen.

Bei dem Beispiele einer Verbindung gemäß Fig. 3 ist ein Verbindungsmittel 20 bzw. 21 eingesetzt, das im Bereich seiner Endabschnitte 20a und 20b bzw. 21a und 21 b Auflager 20c und 20d bzw. 21c und 21d bildet. Diese Auflager liegen an einander gegenüberliegenden Wänden 22 und 23 bzw. 24 und 25 von im Querschnitt rechteckförmigen Längskanälen 3 bzw. 4 von Profilteilen 1 und 2 an, wie sie in Fig. 1 dargestellt sind.

Im mittleren Bereich der Verbindungsmittel 20 und 21 ist das Verbindungsmittel 20 bzw. 21 so ausgestaltet, dass es an seinen Endabschnitten 20a und 20b bzw. 21a und 21b zwei symmetrisch zur Symmetrieachse 26 liegende Ergänzungs-Auflager 20e und 20f bzw. 21e und 21f aufweist; mit den Ergänzungs-Auflagern 20e und 20f bzw. 21e und 21f liegt das Verbindungsmittel 20 bzw. 21 an einer weiteren Wand 27 bzw. 28 der Längskanäle 3 und 4 an. Schließlich weisen die Verbindungsmittel 20 und 21 noch Zusatz-Auflager 20g und 20h bzw. 21g und 21h auf, die den Ergänzungs-Auflagern 20e bzw. 20f bzw. 21e und 21f gegenüber liegen und an einer Wand 29 bzw. 30 der Längskanäle 3 und 4 anliegen.

Damit ist auch hier eine Verbindung geschaffen, die bei einer Querbelastung in Richtung des Pfeils 31 federelastisch ist und es somit erlaubt, Profilteile 1 und 2 aus Aluminium mit Verbindungsmitteln aus Federstahl zu verbinden, ohne dass bei einer Querbelastung Schäden an den Aluminium-Profilteilen entstehen.

## Patentansprüche

1. Verbindung von mindestens zwei Bauteilen mit fluchtenden Rechteck-Löchern mit einem stiftförmigen Verbindungsmittel C-förmigen Querschnitts, wobei
• das Verbindungsmittel (5, 6) zum Verbinden von Bauteilen (1, 2) mit fluchtenden Rechteck-Löchern (3, 4)derart geformt ist, dass es jeweils im Bereich der Endabschnitte (5a, 5b; 6a, 6b) des C-förmigen Querschnitts außen einander gegenüberliegend jeweils ein Auflager an einander gegenüber liegenden Wänden der Rechteck-Löcher bildet und im Bereich der Auflager jeweils einen Krümmungsradius (r1) aufweist, der ungleich dem halben Abstand der Auflager voneinander ist,
**dadurch gekennzeichnet, dass**
• zwischen den Bereichen der Endabschnitte (5a,5b;6a,6b) des Verbindungsmittels (5;6) und den einander gegenüber liegenden Wänden (14,15) der Rechteck-Löcher (4,4) äußere Positionier-Formstücke (16,17) mit Ausnehmungen liegen, deren Ausgestaltung der des C-förmigen Verbindungsmittels im Bereich der Auflager (5c,5d;6c,6d) entspricht und in die das Verbindungsmittel (5;6) jeweils mit seinem Auflager (5c,5d;6c,6d) eingreift,
• wobei die Lage der Ausnehmungen so gewählt ist, dass das Verbindungsmittel (5;6) bis auf seine Auflager (5c,5d;6c,6d) frei in den Rechteck-Löchern (3,4) liegt.

2. Verbindung nach Anspruch 1, **dadurch gekennzeichnet, dass**
• die Bauteile Profilteile (1, 2) mit jeweils mindestens einem Längskanal (3, 4) sind und die Längskanäle (3, 4) die fluchtenden Rechteck-Löcher bilden.

3. Verbindung nach einem der Ansprüche 1 oder 2, **dadurch gekennzeichnet, dass**
• die Bauteile (1, 2) aus Aluminium bestehen.

4. Verbindung nach einem der Ansprüche 1 bis 3, **dadurch gekennzeichnet, dass**
• das Verbindungsmittel (5, 6) aus Federstahl besteht.

5. Verbindung nach Anspruch 4, **dadurch gekennzeichnet, dass**
• das Verbindungsmittel (5, 6) aus Federstahl bei Bauteilen aus weichem Material mit seinem C-förmigen Querschnitt quer zur mechanischen Hauptbelastung der Verbindung ausgerichtet ist.

6. Verbindung nach einem der Ansprüche 1 bis 5, **dadurch gekennzeichnet, dass**
• die Profilteile als Fußboden-Sitzschienen in einem Schienenfahrzeug oder einem Autobus ausgebildet sind.

## Claims

1. Connection of at least two components with aligned rectangular holes by a pin-like connecting means of C-shaped cross section wherein
• the connecting means (5, 6) is formed for connecting components (1, 2) with aligned rectangular holes (3, 4) such that, at opposite locations on the outside in the region of the end portions (5a, 5b; 6a, 6b) of the C-shaped cross section in each case, it forms a respective bearing means on each of the opposite walls of the rectangular holes and, in the region of the bearing means, has a respective radius of curvature (r1), which is not equal to half the distance between the bearing means,
**characterized in that**
• the regions of the end portions (5a, 5b; 6a, 6b) of the connection means (5; 6) and the mutually opposite walls (14, 15) of the rectangular holes (3, 4) have located between them outer shaped positioning pieces (16, 17) with recesses, of which the configuration corresponds to that of the C-shaped connecting means in the region of the bearing means (5c, 5d; 6c, 6d) and in which the connecting means (5; 6) engages in each case by way of its bearing means (5c, 5d; 6c, 6d),
• wherein the position of the recesses is selected such that, with the exception of its bearing means (5c, 5d; 6c, 6d), the connecting means (5; 6) lies freely in the rectangular holes (3, 4).

2. Connection according to Claim 1, **characterized in that**
• the components are profile parts (1, 2) with in each case at least one longitudinal channel (3, 4), and the longitudinal channels (3, 4) form the aligned rectangular holes.

3. Connection according to either of Claims 1 and 2, **characterized in that**
• the components (1, 2) consist of aluminium.

4. Connection according to one of Claims 1 to 3, **characterized in that**
• the connection means (5, 6) consist of spring steel.

5. Connection according to Claim 4,
**characterized in that**,
• in the case of components made of soft material, the connecting means (5, 6) made of spring steel has its C-shaped cross section oriented transversely to the main mechanical loading of the connection.

6. Connection according to one of Claims 1 to 5, **characterized in that**
• the profile parts are designed in the form of floor seat rails in a rail vehicle or a bus.

## Revendications

1. Liaison d'au moins deux pièces, ayant des trous en rectangle alignés, par un moyen de liaison en forme de broche de section transversale en forme de C, dans laquelle
• le moyen (5, 6) de liaison des pièces (1, 2) ayant des trous (3, 4) en rectangle alignés est conformé de manière à former, respectivement dans la région des segments (5a, 5b ; 6a, 6b) d'extrémité de la section transversale en forme de C se faisant face, extérieurement respectivement un appui sur des parois opposées l'une à l'autre des trous en rectangle et a, dans la région des appuis, respectivement un rayon (r1) de courbure qui n'est pas égal à la moitié de la distance entre les appuis,
**caractérisé en ce que**
• entre les régions des segments (5a, 5b ; 6a, 6b) d'extrémité du moyen (5 ;6) de liaison et les parois (14, 15) se faisant face l'une à l'autre des trous (4, 4) en rectangle se trouvent des pièces (16, 17) de forme de positionnement extérieure ayant des évidements, dont la forme correspond à celle du moyen de liaison en forme de C dans la région des appuis (5c, 5d ; 6c, 6d) et dans lesquels le moyen (5 ;6) de liaison pénètre respectivement par son appui (5c, 5d ; 6c, 6d),
• dans laquelle la position des évidements est choisie de manière à ce que le moyen (5 ;6) de liaison soit, à l'exception de son appui (5c, 5d ; 6c, 6d), libre dans les trous (3, 4) en rectangle.

2. Liaison suivant la revendication 1,
**caractérisé en ce que**
• les pièces sont des pièces (1, 2) profilées ayant respectivement au moins un conduit (3, 4) longitudinal et les conduits (3, 4) longitudinaux forment les trous en rectangle alignés.

3. Liaison suivant l'une des revendications 1 ou 2, **caractérisé en ce que**
• les pièces (1, 2) sont en aluminium,

4. Liaison suivant l'une des revendications 1 à 3, **caractérisé en ce que**
• le moyen (5, 6) de liaison est en acier pour ressort.

5. Liaison suivant la revendication 4,
**caractérisé en ce que**
• le moyen (5, 6) de liaison est en acier pour ressort pour des pièces en matériau tendre, en ayant sa section transversale en forme de C dirigée transversalement à la contrainte mécanique principale de la liaison.

6. Liaison suivant l'une des revendications 1 à 5,
**caractérisé en ce que**
• les pièces profilées sont sous la forme de rails de siège de plancher dans un véhicule ferroviaire ou dans un autobus.
